# EUROPÄISCHE PATENTANMELDUNG

(11) **EP 4 796 951 A1**
(43) Veröffentlichungstag der Anmeldung: **26.08.2026**
(21) Anmeldenummer: 25159390.1
(22) Anmeldetag: 21.02.2025
(51) Int. Cl.: G01S 7/481, G01S 7/497, G01S 17/10, G01S 17/42, G01S 17/89

(54) **ROTIERENDES ENTFERNUNGSMESSSYSTEM**

(71) Anmelder: SICK AG, 79183 Waldkirch (DE)
(72) Erfinder: Schneider, Georg, 20535 Hamburg (DE); Diebel, Falko, 22175 Hamburg (DE)
(74) Vertreter: Manitz Finsterwald Patent- und Rechtsanwaltspartnerschaft mbB

(57) **Zusammenfassung**

In einer Ausführungsform weist ein rotierendes Entfernungsmesssystem einen Motor, eine Sende- und Empfangseinheit und eine Steuer- und Auswerteeinheit auf. Die Sende- und Empfangseinheit ist drehbar gelagert, mit dem Motor verbunden und dazu eingerichtet, angetrieben von dem Motor eine Szene in einem Erfassungsbereich rund um das Entfernungsmesssystem durch Aussenden von Lichtpulsen und Detektion remittierter Lichtpulse zu erfassen. Das Entfernungsmesssystem ist dazu eingerichtet, Daten der erfassten Szene mit einer einstellbaren Framerate auszugeben. Die Steuer- und Auswerteeinheit ist dazu eingerichtet, den Motor so anzusteuern, dass der Motor die Sende- und Empfangseinheit mit einer Frequenz dreht, die einem Vielfachen der einstellbaren Framerate entspricht.

## Beschreibung

Die Erfindung betrifft ein rotierendes lichtbasiertes Entfernungsmesssystem sowie ein Verfahren zum Betreiben eines rotierenden Entfernungsmesssystems nach dem jeweiligen Oberbegriff der unabhängigen Ansprüche.

Ein rotierendes lichtbasiertes Entfernungsmesssystem, beispielsweise ein Laserscanner oder LiDAR (Englisch: Light Detection and Ranging)-Sensor, wird unter anderem für Abstandsmessungen in einem Sichtbereich oder Erfassungsbereich um das Messsystem herum, der durch einen horizontalen Winkelbereich gegeben ist, eingesetzt. Eine mögliche technische Ausführungsform eines derartigen Messsystems umfasst einen rotierenden Teil mit einer Sende- und Empfangseinheit und einen stationären Teil, in welchem unter anderem eine Auswertung der von dem Sendeempfangsteil ermittelten Daten, sowie eine Ansteuerung eines Motors, der den rotierenden Teil antreibt, realisiert ist. Dabei ist üblicherweise die Sende- und Empfangseinheit in Form eines Chips oder eines ASICs (Englisch: Application Specific Integrated Circuit) implementiert.

Einige der derzeit bekannten Sendeempfangschips sind jedoch nicht in der Lage, durchgehend zu messen und Daten bereitzustellen. Die Daten werden jeweils in Form eines Frames geliefert, wobei jeder Frame ein 360°-Sichtfeld rund um den Scanner bzw. Sensor abbildet. Da die Empfängerchips, wie bereits erläutert, nicht durchgehend messen können, wird zwischen zwei Frames derzeit eine Pause benötigt. Ein nahtloses Scannen eines 360°-Sichtfeldes mit mehreren aufeinanderfolgenden Frames ist also nicht möglich. Bei den bekannten Lösungen wird jeweils nach ca. 360° eine Pause eingelegt, in der allerdings der Scanner weiterdreht, beispielsweise um ca. 50°. Erst nach dieser Pause ist es technisch möglich, den nächsten Frame aufzunehmen. Demzufolge muss entweder das Sichtfeld eingeschränkt werden, beispielsweise auf die Differenz zwischen 360° und dem Pausenwinkelbereich, oder jeder Frame beginnt an einer anderen Stelle im Sichtfeld. Ein Frame, der nur die Differenz erfasst, deckt nur noch einen Teil des gesamten Sichtfeldes, im genannten Beispiel 310°, ab. Beide Lösungen sind vor allem für nachgelagerte Berechnungen und die Weiterverarbeitung der gescannten Frames von Nachteil.

Eine Aufgabe besteht folglich darin, ein rotierendes Entfernungsmesssystem anzugeben, bei dem die Nachteile des Standes der Technik überwunden werden. Insbesondere soll ein wiederkehrendes Bereitstellen von Frames, die im Wesentlichen das gesamte Sichtfelde um das Messsystem herum abbilden, ermöglicht werden.

Die Aufgabe wird gelöst durch das rotierende Entfernungsmesssystem des Anspruchs 1. Weiterbildungen und Ausgestaltungen der Erfindung sind jeweils Gegenstand der abhängigen Ansprüche.

Eine Ausführungsform der Erfindung betrifft ein rotierendes Entfernungsmesssystem. Das Entfernungsmesssystem umfasst einen Motor, eine Sende- und Empfangseinheit und eine Steuer- und Auswerteeinheit. Die Sende- und Empfangseinheit ist mit dem Motor verbunden, drehbar gelagert und dazu eingerichtet, angetrieben von dem Motor eine Szene in einem Erfassungsbereich rund um das Entfernungsmesssystem durch Aussenden von Lichtpulsen und Detektion remittierter Lichtpulse zu erfassen. Das Entfernungsmesssystem ist dazu eingerichtet, Daten der erfassten Szene mit einer einstellbaren Framerate auszugeben. Die Steuer- und Auswerteeinheit ist dazu eingerichtet, den Motor so anzusteuern, dass der Motor die Sende- und Empfangseinheit mit einer Frequenz dreht, die einem Vielfachen der einstellbaren Framerate entspricht.

Die erfindungsgemäße Lösung sieht also vor, die rotierende Sende- und Empfangseinheit durch entsprechende Ansteuerung des Motors mit einer höheren Frequenz zu drehen und Frames mit einer Rate, die einem Bruchteil dieser Drehfrequenz entspricht, bereitzustellen. Ist beispielsweise eine Framerate von 20 Hz gewünscht, d.h. eingestellt, so dreht der Motor die Sende- und Empfangseinheit mit einer Frequenz von beispielsweise 40 Hz. Damit wird ein nahtloses, mehrfach hintereinander durchgeführtes Erfassen des Sichtfeldes rund um den Sensor bzw. das Entfernungsmesssystem und ein wiederkehrendes Bereitstellen entsprechender Frames ermöglicht.

Die Sende- und Empfangseinheit realisiert die Funktionalitäten einer Sendeeinheit und einer Empfangseinheit. Dafür umfasst die Sende- und Empfangseinheit lichtemittierende Elemente zum Aussenden von Lichtpulsen und dementsprechende lichtempfindliche Elemente oder Detektorelemente zum Empfangen von Lichtpulsen, die nach dem Aussenden an bzw. in der Szene im Erfassungsbereich des Entfernungsmesssystems remittiert oder reflektiert wurden. Beispielsweise werden Leuchtdioden, LEDs, oder Laserdioden, beispielsweise VCSELs (Englisch: Vertical Cavity Surface Emitting Laser), eingesetzt, um Lichtpulse zu erzeugen oder zu emittieren, weshalb die Sendeeinheit auch als Emittereinheit bezeichnet werden kann. Umfasst die Sendeeinheit mehrere derartige Emitter, so sind diese beispielsweise in Form eines Arrays angeordnet und man bezeichnet die Sendeeinheit auch als Emitterarray. Die ausgesendeten Lichtpulse sind somit unter Umständen Laserpulse. Zur Detektion der remittierten Lichtpulse, insbesondere Laserpulse, werden beispielsweise Fotodioden, insbesondere Lawinenfotodioden (Englisch: Avalanche Photodiodes, APDs) oder Einzelphotonen-Lawinendioden (Englisch: Single Photon Avalanche Diodes, SPADs), eingesetzt. Auch hier kann eine Vielzahl derartiger lichtsensitiver Elemente in der Empfangseinheit eingesetzt werden, die in Form eines Arrays angeordnet sind. Der oben aufgeführte Empfangschip oder Empfangs-ASIC umfasst also beispielsweise ein Array von SPADs. Üblicherweise wird die beschriebene Sendeeinheit mit der beschriebenen Empfangseinheit integriert und drehbar gelagert mit dem Motor verbunden. Die Sende- und Empfangseinheit umfasst dabei neben den lichtemittierenden und den lichtsensitiven Elementen bekanntermaßen einen entsprechenden Speicher sowie eine Recheneinheit, um die erfassten Signale zu verarbeiten.

Die Steuer- und Auswerteeinheit umfasst zumindest einen Prozessor, insbesondere einen Mikroprozessor, und einen Speicher. Die Steuer- und Auswerteeinheit ist beispielsweise über einen rotierenden Koppler mit der Sende- und Empfangseinheit gekoppelt. Die Steuer- und Auswerteeinheit dreht sich also nicht. Sie ist beispielsweise, bei Verwendung eines Elektromotors, an einem Stator des Motors angeordnet, während die Sende- und Empfangseinheit an einem Rotor dieses Motors angeordnet ist. Die Steuer- und Auswerteeinheit steuert den Motor, insbesondere seine Drehgeschwindigkeit. Diese Drehgeschwindigkeit entspricht also der Drehrate der Sende- und Empfangseinheit.

Das Entfernungsmesssystem ist dazu eingerichtet, Daten der von der Sende- und Empfangseinheit erfassten Szene jeweils in Form eines Frames bereitzustellen oder auszugeben. Dies erfolgt mit der Framerate, die beispielsweise vorab für eine jeweilige Applikation eingestellt werden kann. Anders ausgedrückt bezeichnet die Framerate die Häufigkeit, mit der das Entfernungsmesssystem Daten seines Erfassungsbereichs bereitstellt. Der Erfassungsbereich kann auch als Sichtbereich bezeichnet werden. Ausgegebene Frames werden beispielsweise von einer nachgelagerten Elektronik weiterverarbeitet.

Gemäß einer Weiterbildung ist die Sende- und Empfangseinheit dazu ausgebildet, die Szene rund um das Entfernungsmesssystem im Wesentlichen vollständig, insbesondere in einem Winkelbereich von zumindest im Wesentlichen 270°, 300°, 330° oder 360°, als einen Frame zu erfassen. Die vorgenannten Winkelbereiche können also dem Sichtfeld entsprechen.

Ein Frame bezieht sich also auf das Sichtfeld bzw. den Erfassungsbereich bzw. eine Szene in diesem Sichtfeld rund um das Entfernungsmesssystem, welches an die, insbesondere genau, 360° beträgt. Um einen Frame zu erzeugen, führt die Sende- und Empfangseinheit während der Drehung durch den Motor eine endliche Anzahl von Einzelmessungen durch. Dabei wird Licht in gepulster Form ausgesendet und remittiertes Licht aus der Szene erfasst. Beispielsweise wird bei einer entsprechenden Anordnung von Detektorelementen jeweils eine Spalte gleichzeitig gemessen. In einer beispielhaften Implementierung werden für einen Frame 1000 derartiger Spalten gemessen.

Gemäß einer Weiterbildung beginnt ein Frame jeweils an einer, insbesondere genau einer, Position in dem Erfassungsbereich des Entfernungsmesssystems und endet ebenfalls an dieser Position. Dabei ist dieser Position ein vordefinierter Winkel zugeordnet. Aufeinanderfolgende Frames können bevorzugt jeweils an derselben Position beginnen und/oder enden.

Das erfindungsgemäße rotierende Entfernungsmesssystem ermöglicht somit die Ausgabe von Frames, die jeweils genau an der gleichen Position im Sichtfeld oder Erfassungsbereich des Messsystems beginnen bzw. enden und jeweils das volle Sichtfeld bzw. eine 360°-Szene abbilden. Dadurch wird eine sinnvolle Weiterverarbeitung der Frames ermöglicht.

Gemäß einer Weiterbildung ist die Steuer- und Auswerteeinheit dazu eingerichtet, die Sende- und Empfangseinheit abwechselnd in einen ersten und einen zweiten Betriebsmodus zu steuern. In dem ersten Betriebsmodus erfolgt die Erfassung der Szene, während in dem zweiten Betriebsmodus eine Verarbeitung erfolgt.

In dem ersten Betriebsmodus wird eine Szene erfasst und intern ein Frame erzeugt. Im zweiten Betriebsmodus erfolgt eine Verarbeitung. Am Ende des zweiten Betriebsmodus wird der Frame durch das Entfernungsmesssystem bereitgestellt, also nach extern ausgegeben. Die Verarbeitung kann sich dabei auf eine interne Berechnung oder eine Vorverarbeitung des gerade erfassten Frames beziehen, was nachstehend näher erläutert wird.

In einer weiteren Ausführungsform ist die Sende- und Empfangseinheit in dem zweiten Betriebsmodus dazu eingerichtet, die Erfassung zumindest zeitweise zu pausieren.

In dem zweiten Betriebsmodus ist die Sende- und Empfangseinheit zeitweise, d.h. während eines Anteils einer Umdrehung des Motors, oder während der ganzen Zeitdauer des zweiten Betriebsmodus inaktiv. Der zweite Betriebsmodus wird demgemäß unter anderem für eine interne Scanpause genutzt.

Erster und zweiter Betriebsmodus werden zyklisch wiederholt und am Ende eines jeden Zyklus, der einen ersten und einen zweiten Betriebsmodus beinhaltet, wird ein Frame bereitgestellt.

In einer beispielhaften Realisierung wird während einer 360°-Drehung der Sende- und Empfangseinheit im ersten Betriebsmodus ein Frame erfasst. Anschließend pausiert die Sende- und Empfangseinheit die Erfassung im zweiten Betriebsmodus, welcher die Dauer einer zweiten Umdrehung der Sende- und Empfangseinheit hat. Die Erfassung des nächsten Frames startet, sobald die Sende- und Empfangseinheit nach der zweiten Umdrehung wieder bei 0° angekommen ist. Der Zyklus beginnt von neuem.

Gemäß einer Weiterbildung umfasst die Verarbeitung in dem zweiten Betriebsmodus eine Verarbeitung eines in dem direkt vorangegangenen ersten Betriebsmodus erfassten Frames durch die Sende- und Empfangseinheit und/oder durch die Steuer- und Auswerteeinheit. Die Verarbeitung umfasst dabei insbesondere eine Anwendung eines Kanten- und/oder Nachbarschaftsfilters.

Ein in dem ersten Betriebsmodus aufgezeichneter oder erfasster Frame wird demzufolge in dem direkt daran anschließenden zweiten Betriebsmodus desselben Zyklus bereits vorverarbeitet. Diese Vorverarbeitung kann auch als Englisch: Preprocessing bezeichnet werden. Beispielsweise wird in dem zweiten Betriebsmodus ein Frame vorverarbeitet, indem er gefiltert wird. Für dieses Filtern steht im zweiten Betriebsmodus bereits der komplette Frame zur Verfügung. Im zweiten Betriebsmodus kann somit bereits die gesamte 360°-Szene verarbeitet werden. Dies ist besonders vorteilhaft, wenn hier Kanten- bzw. Nachbarschaftsfilter eingesetzt werden. Auch ein Filter, das auf Überstrahleffekte gerichtet ist, profitiert von der Vorverarbeitung der gesamten Szene.

In einer Weiterbildung umfasst die Verarbeitung in dem zweiten Betriebsmodus eine interne Kalibration der Sende- und Empfangseinheit, insbesondere die interne Kalibration einer Distanzgenauigkeit der Sende- und Empfangseinheit, jeweils insbesondere unter Verwendung eines internen Referenzziels.

Alternativ oder zusätzlich kann der zweite Betriebsmodus dafür verwendet werden, die Sende- und Empfangseinheit intern zu kalibrieren. Dabei kann diese interne Kalibration beispielsweise direkt in einer Steuerung der Sende- und Empfangseinheit durchgeführt werden. Diese Steuerung wird zum Beispiel mit Hilfe einer feldprogrammierbaren Gatteranordnung, Englisch Field-Programmable Gate-Array, FPGA, realisiert und als Rotor-Steuer-/Auswerteeinheit bezeichnet. Bei der Kalibrierung kommt in fachüblicher Art und Weise ein internes Referenzziel zum Einsatz, welches vermessen wird. Vorteilhafterweise müssen die Daten hierfür nicht die Sende- und Empfangseinheit, sprich den rotierenden Teil des Messsystems, verlassen, sondern können direkt hier verarbeitet werden. Lediglich im Fall der Detektion eines Fehlers, falls beispielsweise festgestellt wird, dass die Sendeeinheit komplett ausgefallen ist, kann ein entsprechendes Signal an die Steuer- und Auswerteeinheit weitergegeben werden. Zudem kann die Distanzgenauigkeit der Sende- und Empfangseinheit kalibriert bzw. nachjustiert werden.

Gemäß einer Weiterbildung umfasst die Verarbeitung in dem zweiten Betriebsmodus eine Konfiguration der Sende- und Empfangseinheit für die interne Kalibration, eine daran anschließende Vermessung des Referenzziels und eine darauffolgende Konfiguration der Sende- und Empfangseinheit für das Erfassen der Szene rund um das Entfernungsmesssystem.

Gemäß dieser Ausführungsform wird, beispielsweise während einer ersten Viertelumdrehung der Sende- und Empfangseinheit in dem zweiten Betriebsmodus, diese, insbesondere eine davon umfasste Rotor- Steuer-/Auswerteeinheit, für die interne Kalibration konfiguriert. Anschließend wird das interne Referenzziel vermessen, beispielsweise während einer weiteren Viertelumdrehung der Sende- und Empfangseinheit im zweiten Betriebsmodus. Während dieser Kalibration wird aufgrund der Konfiguration eine andere Art der Signalverarbeitung in der Sende- und Empfangseinheit verwendet. Diese kann eine höhere zeitliche Auflösung haben, als die Art der Signalverarbeitung, die während Zeiten, in denen keine interne Kalibration stattfindet zum Einsatz kommt. Nach Abschluss der Vermessung des internen Referenzziels wird die Sende- und Empfangseinheit wieder in die ursprüngliche Konfiguration, die vor der internen Kalibration verwendet wurde, zurückgesetzt, beispielsweise während einer weiteren Viertelumdrehung im zweiten Betriebsmodus. Abschließend kann für eine letzte Viertelumdrehung im zweiten Betriebsmodus gemäß dem beschriebenen Beispiel noch eine Pause vorgesehen sein.

Gemäß einer Weiterbildung umfasst die Verarbeitung in dem zweiten Betriebsmodus eine Auswertung eines in dem direkt vorangegangenen ersten Betriebsmodus erfassten Frames durch die Sende- und Empfangseinheit und eine auf dieser Auswertung basierende Anpassung einer Konfiguration der Sende- und Empfangseinheit.

Der zweite Betriebsmodus, in welchem zumindest zeitweise die Erfassung pausiert, kann dazu genutzt werden, von Frame zu Frame die Sende- und Empfangseinheit, beispielsweise die Rotor- Steuer-/Auswerteeinheit, umzukonfigurieren. Nach der oben beschriebenen internen Kalibration bzw. basierend auf dieser kann beispielsweise eine adaptive Anpassung an die mit dem Frame erfasste Szene erfolgen. Dabei kann eine Vorverarbeitung nur in der Rotor- Steuer-/Auswerteeinheit stattfinden. Dies begünstigt eine kurze und schnelle Regelschleife. Beispielhaft kann der Ablauf folgendes umfassen:
- Aufzeichnen eines Frames im ersten Betriebsmodus, z.B. während einer Umdrehung;
- während einer halben Umdrehung im zweiten Betriebsmodus Auswertung des Frames und Ermittlung relevanter Kennzahlen, wie dem Vorhandensein von Reflektoren, während der zweiten halben Umdrehung im zweiten Betriebsmodus Konfiguration der Sende- und Empfangseinheit basierend auf den ermittelten Kennzahlen.

Damit lässt sich vorteilhafterweise eine stufenlose adaptive Konfigurationsanpassung umsetzen, ohne dass das Sichtfeld eingeschränkt wird.

Gemäß einer weiteren Ausführungsform ist das Vielfache der Framerate ein ganzzahliges Vielfaches, insbesondere zwei.

Demzufolge wird die Sende- und Empfangseinheit insbesondere mit der doppelten Frequenz bezogen auf die eingestellte Framerate gedreht. In dem bereits beschriebenen Beispiel der Framerate von 20 Hz wird also die Sende- und Empfangseinheit durch Antrieb mittels eines z.B. Brushless DC-Motors mit 40 Hz gedreht. Dadurch wird eine hohe Framerate erzielt, bei der jeweils Frames mit dem vollen Sichtfeld bereitgestellt werden, auch wenn in der Sende- und Empfangseinheit ein Empfänger eingesetzt wird, der eine Scanpause benötigt. Es können auch andere beliebige Vielfache der Framerate als Drehfrequenz für den Motor und die damit verbundene Sende- und Empfangseinheit eingesetzt werden. Beschränkungen bestehen hier lediglich in einer Beschränkung der Motordrehfrequenz.

Der erfindungsgemäße Effekt wird auch erzielt, wenn eine ursprüngliche Drehfrequenz der Sende- und Empfangseinheit beibehalten wird, und die Framerate gleichzeitig beispielsweise halbiert wird.

In einer weiteren Ausführungsform ist das Entfernungsmesssystem, wie oben beschrieben, als LiDAR-Sensor oder als Laserscanner realisiert.

Eine weitere Ausführungsform der Erfindung betrifft ein Verfahren zum Betreiben eines rotierenden Entfernungsmesssystems, welches einen Motor, eine Sende- und Empfangseinheit und eine Steuer- und Auswerteeinheit umfasst. Die Sende- und Empfangseinheit, welche drehbar gelagert und mit dem Motor verbunden ist, sendet angetrieben von dem Motor Lichtpulse aus, detektiert remittierte Lichtpulse und erfasst dadurch eine Szene in einem Erfassungsbereich rund um das Entfernungsmesssystem. Das Entfernungsmesssystem gibt Daten der erfassten Szene mit einer einstellbaren Framerate aus. Die Steuer- und Auswerteeinheit steuert den Motor so an, dass der Motor die Sende- und Empfangseinheit mit einer Frequenz dreht, die einem Vielfachen der einstellbaren Framerate entspricht.

Das Verfahren wird beispielsweise innerhalb des rotierenden Entfernungsmesssystems, wie oben beschrieben, realisiert. Vorteile und Weiterbildungen gelten entsprechend.

Mit dem Verfahren wird es ermöglicht, mehrfach hintereinander eine das Entfernungsmesssystem umgebende Szene vollständig zu erfassen.

Die genannten Ausführungsformen und Weiterbildungen können untereinander kombiniert werden, sofern sich nicht explizit etwas anderes ergibt oder beschrieben ist.

Nachfolgend wird die Erfindung rein beispielhaft unter Bezugnahme auf die Zeichnung beschrieben. Es zeigt:

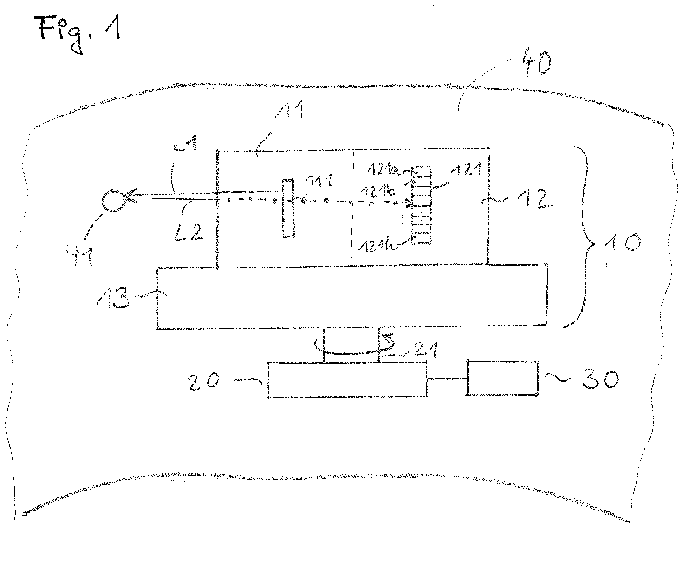

- Fig. 1: eine schematische Darstellung eines Ausführungsbeispiels eines rotierenden Entfernungsmesssystems wie vorgeschlagen.

Fig. 1 zeigt eine schematische Darstellung eines Ausführungsbeispiels eines rotierenden Entfernungsmesssystems wie vorgeschlagen. Das lichtbasierte Messsystem umfasst eine Sende- und Empfangseinheit 10, einen Motor 20 und eine Steuer- und Auswerteeinheit 30. Die Sende- und Empfangseinheit 10 ist drehbar gelagert und mit dem Motor 20 verbunden, beispielsweise über einen rotierenden Koppler 21. Der rotierende Koppler 21, welcher hier als Welle dargestellt ist, ermöglicht, dass die Sende- und Empfangseinheit 10 angetrieben von dem Motor 20 um volle 360° rotiert.

Die Sende- und Empfangseinheit 10 hat eine Sendeeinheit 11, eine Empfangseinheit 12 und eine Treibereinheit 13. Die Sendeeinheit 11 hat mindestens ein lichtemittierendes Element 111, welches Lichtpulse L1 aussendet. Beispielsweise ist das lichtemittierende Element 111 als Laserdiode realisiert. Die Sendeeinheit 11 kann alternativ auch ein Array von lichtemittierenden Elementen 111 aufweisen. Die Empfangseinheit 12 umfasst ein Array 121 mit lichtempfindlichen Elementen 121a, 121b, ..., 121h. Die lichtempfindlichen Elemente sind beispielsweise jeweils als eine SPAD ausgeführt. Jede SPAD ist zur Detektion mindestens eines remittierten Lichtpulses L2 eingerichtet. Ein von der Sende- und Empfangseinheit 10 ausgesandter Lichtpuls bzw. Laserpuls L1 wird von einer - hier nur teilweise dargestellten- Szene 40, im gezeigten Beispiel von einem Objekt 41, welches sich innerhalb der Szene 40 befindet, remittiert und erreicht als reflektierter oder remittierter Laserpuls L2 die Sende- und Empfangseinheit 10.

Die Treibereinheit 13 steuert das bzw. die lichtemittierenden Elemente 111 sowie die lichtempfindlichen Elemente 121a bis 121h. Üblicherweise wird die Treibereinheit 13 in Form eines FPGAs, realisiert und kann auch als Rotor- Steuer-/Auswerteeinheit bezeichnet werden. In der Rotor- Steuer-/Auswerteeinheit 13 kann zudem Rechenleistung implementiert sein, um die vom Empfangsteil 12 detektierten Signale vorzuverarbeiten. Beispielsweise kann in der Rotor- Steuer-/Auswerteeinheit 13 ein gerade erfasster Frame vorverarbeitet werden.

Die Steuer- und Auswerteeinheit 30 steuert den Motor 20 so an, dass der Motor 20 die Sende- und Empfangseinheit 10 mit einer Frequenz dreht, die einem Vielfachen der Framerate entspricht. Wie bereits beschrieben, gibt die Framerate an, wie oft pro Zeiteinheit das Entfernungsmesssystem ein Abbild der Szene 40 ausgibt. Ein Frame wird also beispielsweise durch die Steuer- und Auswerteeinheit 30 bereitgestellt. Zudem steuert die Steuer- und Auswerteeinheit 30 die Sende- und Empfangseinheit 10 alternierend in einen ersten und einen zweiten Betriebsmodus. Im ersten Betriebsmodus erfasst die Sende- und Empfangseinheit 10 die Szene 40. Im zweiten Betriebsmodus erfolgt eine Verarbeitung.

In einer beispielhaften Realisierung beträgt die Drehfrequenz des Motors das Doppelte der Framerate. Demzufolge zeichnet die Sende- und Empfangseinheit 10 während einer ersten Umdrehung die Szene 40 rund um das Entfernungsmesssystem in einem Winkelbereich von annähernd oder genau 360° auf. Während der darauffolgenden nächsten Umdrehung des Motors 20 wird der zweite Betriebsmodus eingenommen, in welchem zumindest die Empfängereinheit 12, insbesondere direkt nach Abschluss der ersten Umdrehung des Motors 20, zumindest zeitweise inaktiv ist. Im inaktiven Zustand werden somit keine weiteren Daten aus der Szene 40 erfasst, obwohl sich die Sende- und Empfangseinheit 10 aufgrund des Antriebs durch den Motor 20 weiterdreht. Die dadurch entstandene interne Scanpause wird vorteilhafterweise für interne Berechnungen entweder innerhalb der Rotor- Steuer-/Auswerteeinheit 13 oder in der Steuer- und Auswerteeinheit 30 durchgeführt. Am Ende des zweiten Betriebsmodus, welches in diesem Beispiel das Ende der zweiten Umdrehung des Motors 20 ist, wird durch das Entfernungsmesssystem ein Frame, welcher 360° der Szene 40 umfasst, ausgegeben.

Die interne Scanpause im zweiten Betriebsmodus wird wie oben beschrieben beispielsweise dafür eingesetzt, um eine interne Kalibration der Sende- und Empfangseinheit 10 durchzuführen. Dafür wird ein internes Referenzziel vermessen und mit einer anderen Art der Signalverarbeitung innerhalb der Rotor- Steuer-/Auswerteeinheit 13 die daraus erhaltenen Daten ausgewertet. Die Daten bleiben also innerhalb der Rotor- Steuer-/Auswerteeinheit 13. Beispielsweise wird daraufhin die Distanzgenauigkeit der Sende- und Empfangseinheit 10 eingestellt. Durch die schnellere Abtastung der Szene 40 aufgrund der im Vergleich zur Framerate mindestens doppelt so hohen Drehfrequenz des Motors 20 wird zusätzlich ein sogenannter Rolling-Shutter-Effekt reduziert. Vorteilhafterweise können auch Sende- und Empfangseinheiten, welche nicht zwingend eine Scanpause brauchen, von den Vorteilen des Betriebs des Entfernungsmesssystems im ersten und zweiten Betriebsmodus profitieren.

In der Rotor- Steuer-/Auswerteeinheit 13 werden beispielsweise Daten von dem Referenzziel verarbeitet, um Parameter zu ermitteln, die anschließend in der Verarbeitung eines normalen Scans, also eines im ersten Betriebsmodus aufgezeichneten Frames, verwendet werden. Das Referenzziel ist dabei in der Sende- und Empfangseinheit 10 vorgesehen. Die Steuer- und Auswerteeinheit 30 verarbeitet die im ersten Betriebsmodus jeweils aufgezeichneten Frames und berechnet daraus bekanntermaßen jeweils eine Punktwolke.

### Bezugszeichenliste

- 10: Sende- und Empfangseinheit
- 11: Sendeeinheit
- 12: Empfangseinheit
- 13: Rotor- Steuer-/Auswerteeinheit
- 20: Motor
- 21: rotierender Koppler
- 30: Steuer- und Auswerteeinheit
- 40: Szene
- 41: Objekt
- L1, L2: Lichtpuls
- 111: lichtemittierendes Element
- 121: Empfängerarray
- 121a, ..., 121h: lichtempfindliches Element

## Patentansprüche

1. Rotierendes Entfernungsmesssystem aufweisend
einen Motor (20), eine Sende- und Empfangseinheit (10) und eine Steuer- und Auswerteeinheit (30),
wobei die Sende- und Empfangseinheit (10) drehbar gelagert, mit dem Motor (20) verbunden und dazu eingerichtet ist, angetrieben von dem Motor (20) eine Szene (40) in einem Erfassungsbereich rund um das Entfernungsmesssystem durch Aussenden von Lichtpulsen (L1) und Detektion remittierter Lichtpulse (L2) zu erfassen,
wobei das Entfernungsmesssystem dazu eingerichtet ist, Daten der erfassten Szene (40) mit einer einstellbaren Framerate auszugeben, und
wobei die Steuer- und Auswerteeinheit (30) dazu eingerichtet ist, den Motor (20) so anzusteuern, dass der Motor (20) die Sende- und Empfangseinheit (10) mit einer Frequenz dreht, die einem Vielfachen der einstellbaren Framerate entspricht.

2. Entfernungsmesssystem nach Anspruch 1,
wobei die Sende- und Empfangseinheit (10) dazu eingerichtet ist, die Szene (40) rund um das Entfernungsmesssystem im Wesentlichen vollständig, insbesondere in einem Winkelbereich von im Wesentlichen 360 Grad, als einen Frame zu erfassen.

3. Entfernungsmesssystem nach Anspruch 1 oder 2,
wobei ein Frame jeweils an einer, insbesondere genau einer, Position in dem Erfassungsbereich des Entfernungsmesssystems beginnt und endet und wobei dieser Position ein vordefinierter Winkel zugeordnet ist.

4. Entfernungsmesssystem nach einem der vorstehenden Ansprüche, wobei die Steuer- und Auswerteeinheit (30) dazu eingerichtet ist, die Sende- und Empfangseinheit (10) abwechselnd in einen ersten und einen zweiten Betriebsmodus zu steuern, wobei in dem ersten Betriebsmodus die Erfassung der Szene (40) erfolgt, und in dem zweiten Betriebsmodus eine Verarbeitung erfolgt.

5. Entfernungsmesssystem nach dem vorstehenden Anspruch,
wobei die Sende- und Empfangseinheit (10) in dem zweiten Betriebsmodus dazu eingerichtet ist, die Erfassung zumindest zeitweise zu pausieren.

6. Entfernungsmesssystem nach Anspruch 4 oder 5,
wobei die Verarbeitung in dem zweiten Betriebsmodus eine Verarbeitung eines in dem direkt vorangegangenen ersten Betriebsmodus erfassten Frames durch die Sende- und Empfangseinheit (10) und/oder durch die Steuer- und Auswerteeinheit (30) umfasst,
wobei die Verarbeitung insbesondere eine Anwendung eines Kanten- und/oder Nachbarschaftsfilters umfasst.

7. Entfernungsmesssystem nach einem der Ansprüche 4 bis 6,
wobei die Verarbeitung in dem zweiten Betriebsmodus eine interne Kalibration der Sende- und Empfangseinheit (10), insbesondere die interne Kalibration einer Distanzgenauigkeit der Sende- und Empfangseinheit (10), jeweils insbesondere unter Verwendung eines internen Referenzziels, umfasst.

8. Entfernungsmesssystem nach dem vorstehenden Anspruch,
wobei die Verarbeitung in dem zweiten Betriebsmodus eine Konfiguration der Sende- und Empfangseinheit (10) für die interne Kalibration, eine Vermessung des Referenzziels und eine anschließende Konfiguration der Sende- und Empfangseinheit (10) für das Erfassen der Szene (40) rund um das Entfernungsmesssystem umfasst.

9. Entfernungsmesssystem nach Anspruch 7,
wobei die Verarbeitung in dem zweiten Betriebsmodus eine Auswertung eines in dem direkt vorangegangenen ersten Betriebsmodus erfassten Frames durch die Sende- und Empfangseinheit (10) und eine auf der Auswertung basierende Anpassung einer Konfiguration der Sende- und Empfangseinheit (10) umfasst.

10. Entfernungsmesssystem nach einem der vorstehenden Ansprüche wobei das Vielfache ein ganzzahliges Vielfaches ist, insbesondere zwei.

11. Entfernungsmesssystem nach einem der vorstehenden Ansprüche welches als Lidarsensor oder als Laserscanner realisiert ist.

12. Verfahren zum Betreiben eines rotierenden Entfernungsmesssystems, welches einen Motor (20), eine Sende- und Empfangseinheit (10) und eine Steuer- und Auswerteeinheit (30) umfasst,
wobei die Sende- und Empfangseinheit (10), welche drehbar gelagert und mit dem Motor (20) verbunden ist, angetrieben von dem Motor (20) Lichtpulse (L1) aussendet, remittierte Lichtpulse (L2) detektiert und dadurch eine Szene (40) in einem Erfassungsbereich rund um das Entfernungsmesssystem erfasst,
wobei das Entfernungsmesssystem Daten der erfassten Szene (40) mit einer einstellbaren Framerate ausgibt, und
wobei die Steuer- und Auswerteeinheit (30) den Motor (20) so ansteuert, dass der Motor (20) die Sende- und Empfangseinheit (10) mit einer Frequenz dreht, die einem Vielfachen der Framerate entspricht.

## Geänderte Patentansprüche

### Geänderte Patentansprüche gemäss Regel 137(2) EPÜ.

1. Rotierendes Entfernungsmesssystem aufweisend
einen Motor (20), eine Sende- und Empfangseinheit (10) und eine Steuerund Auswerteeinheit (30),
wobei die Sende- und Empfangseinheit (10) drehbar gelagert, mit dem Motor (20) verbunden und dazu eingerichtet ist, angetrieben von dem Motor (20) eine Szene (40) in einem Erfassungsbereich rund um das Entfernungsmesssystem durch Aussenden von Lichtpulsen (L1) und Detektion remittierter Lichtpulse (L2) zu erfassen,
wobei das Entfernungsmesssystem dazu eingerichtet ist, Daten der erfassten Szene (40) mit einer einstellbaren Framerate auszugeben, und
wobei die Steuer- und Auswerteeinheit (30) dazu eingerichtet ist, den Motor (20) so anzusteuern, dass der Motor (20) die Sende- und Empfangseinheit (10) mit einer Frequenz dreht, die einem Vielfachen der einstellbaren Framerate entspricht,
wobei die Steuer- und Auswerteeinheit (30) dazu eingerichtet ist, die Sende- und Empfangseinheit (10) abwechselnd in einen ersten und einen zweiten Betriebsmodus zu steuern, wobei in dem ersten Betriebsmodus die Erfassung der Szene (40) erfolgt, und in dem zweiten Betriebsmodus eine Verarbeitung erfolgt und wobei die Sende- und Empfangseinheit (10) in dem zweiten Betriebsmodus dazu eingerichtet ist, die Erfassung zumindest zeitweise zu pausieren.

2. Entfernungsmesssystem nach Anspruch 1,
wobei die Sende- und Empfangseinheit (10) dazu eingerichtet ist, die Szene (40) rund um das Entfernungsmesssystem im Wesentlichen vollständig, insbesondere in einem Winkelbereich von im Wesentlichen 360 Grad, als einen Frame zu erfassen.

3. Entfernungsmesssystem nach Anspruch 1 oder 2,
wobei ein Frame jeweils an einer, insbesondere genau einer, Position in dem Erfassungsbereich des Entfernungsmesssystems beginnt und endet und wobei dieser Position ein vordefinierter Winkel zugeordnet ist.

4. Entfernungsmesssystem nach einem der vorstehenden Ansprüche, wobei die Verarbeitung in dem zweiten Betriebsmodus eine Verarbeitung eines in dem direkt vorangegangenen ersten Betriebsmodus erfassten Frames durch die Sende- und Empfangseinheit (10) und/oder durch die Steuer- und Auswerteeinheit (30) umfasst,
wobei die Verarbeitung insbesondere eine Anwendung eines Kantenund/oder Nachbarschaftsfilters umfasst.

5. Entfernungsmesssystem nach einem der vorstehenden Ansprüche,
wobei die Verarbeitung in dem zweiten Betriebsmodus eine interne Kalibration der Sende- und Empfangseinheit (10), insbesondere die interne Kalibration einer Distanzgenauigkeit der Sende- und Empfangseinheit (10), jeweils insbesondere unter Verwendung eines internen Referenzziels, umfasst.

6. Entfernungsmesssystem nach dem vorstehenden Anspruch,
wobei die Verarbeitung in dem zweiten Betriebsmodus eine Konfiguration der Sende- und Empfangseinheit (10) für die interne Kalibration, eine Vermessung des Referenzziels und eine anschließende Konfiguration der Sende- und Empfangseinheit (10) für das Erfassen der Szene (40) rund um das Entfernungsmesssystem umfasst.

7. Entfernungsmesssystem nach Anspruch 5,
wobei die Verarbeitung in dem zweiten Betriebsmodus eine Auswertung eines in dem direkt vorangegangenen ersten Betriebsmodus erfassten Frames durch die Sende- und Empfangseinheit (10) und eine auf der Auswertung basierende Anpassung einer Konfiguration der Sende- und Empfangseinheit (10) umfasst.

8. Entfernungsmesssystem nach einem der vorstehenden Ansprüche wobei das Vielfache ein ganzzahliges Vielfaches ist, insbesondere zwei.

9. Entfernungsmesssystem nach einem der vorstehenden Ansprüche welches als Lidarsensor oder als Laserscanner realisiert ist.

10. Entfernungsmesssystem nach einem der vorstehenden Ansprüche, wobei die Sende- und Empfangseinheit eine Vielzahl lichtsensitiver Elemente aufweist, die in Form eines Arrays angeordnet sind.

11. Verfahren zum Betreiben eines rotierenden Entfernungsmesssystems, welches einen Motor (20), eine Sende- und Empfangseinheit (10) und eine Steuer- und Auswerteeinheit (30) umfasst,
wobei die Sende- und Empfangseinheit (10), welche drehbar gelagert und mit dem Motor (20) verbunden ist, angetrieben von dem Motor (20) Lichtpulse (L1) aussendet, remittierte Lichtpulse (L2) detektiert und dadurch eine Szene (40) in einem Erfassungsbereich rund um das Entfernungsmesssystem erfasst,
wobei das Entfernungsmesssystem Daten der erfassten Szene (40) mit einer einstellbaren Framerate ausgibt, und
wobei die Steuer- und Auswerteeinheit (30) den Motor (20) so ansteuert, dass der Motor (20) die Sende- und Empfangseinheit (10) mit einer Frequenz dreht, die einem Vielfachen der Framerate entspricht,
wobei die Steuer- und Auswerteeinheit (30) die Sende- und Empfangseinheit (10) abwechselnd in einen ersten und einen zweiten Betriebsmodus steuert, wobei in dem ersten Betriebsmodus die Erfassung der Szene (40) erfolgt, und in dem zweiten Betriebsmodus eine Verarbeitung erfolgt und wobei die Sende- und Empfangseinheit (10) in dem zweiten Betriebsmodus die Erfassung zumindest zeitweise pausiert.
